# EUROPEAN PATENT SPECIFICATION

(11) **EP 3 731 086 B1**
(45) Date of publication and mention of the grant of the patent: **24.09.2025**
(21) Application number: 20174532.0
(22) Date of filing: 28.08.2007
(51) Int. Cl.: G06F 9/445

(54) **MULTI-CORE DEVICE WITH OPTIMIZED MEMORY CONFIGURATION**
MEHRKERNVORRICHTUNG MIT OPTIMIERTER SPEICHERKONFIGURATION
DISPOSITIF MULTICOEUR DOTÉ D'UNE CONFIGURATION DE MÉMOIRE OPTIMISÉE

(30) Priority: 31.08.2006 EP 06300905
(43) Date of publication of application: 28.10.2020
(62) Divisional of application: 07826177.3
(73) Proprietor: SnapTrack, Inc., San Diego, CA 92121-1714 (US)
(72) Inventor: GRANDIN, Emmanuel, San Diego, CA 92121-1714 (US)
(74) Representative: Emde, Eric

(56) References cited:
- US-A1- 2003 163 681
- US-A1- 2003 200 448
- US-A1- 2005 128 795

## Description

The present invention relates to electronic equipments comprising at least two cores (i.e. processors or micro-controllers).

As it is known by the man skilled in the art, a core (processor or microcontroller) is a component of an electronic equipment which is provided for running some software, i.e. some code which is stored into an external ROM ("Read Only Memory"), such as a boot ROM, but not into the core internal ROM. This means that the software to be run has to be provided to the core in order to be executed. Several memory configurations may be used either for storing the software or for executing it.

Apart of that, a core needs a dynamic memory, generically called RAM (for "Random Access Memory"), to temporarily store the data that are associated with the running software and/or the code for this running software. Generally a core comprises an internal RAM, whose storing capacity (or size) is in most cases not sufficient to store all the needed data. In such a case an external RAM has to be associated with the core.

For example, the software to be executed can be stored into a NOR flash memory and executed from this NOR flash memory if its memory interface allows it. For instance a PSRAM ("Pseudo-Static RAM") can be used in association with this NOR flash memory to provide for the dynamic memory storage of data that are associated with the running software. In a variant, the NOR flash memory can be replaced with a NAND flash memory, and the PSRAM can be replaced with a SDRAM ("Synchronous Dynamic RAM"). In this variant the NAND flash memory content (the code to be executed) must be loaded into the SDRAM prior to run it because a NAND flash interface does not support direct code execution from it. A lot of other memory configurations may be envisaged depending on the storing capacity needed (PSRAMs are cheaper than SDRAMs in lower densities, but SDRAMs are cheaper than PSRAMs in high densities) or on the PCB ("Printed Circuit Board") area that might be allocated for the memory components.

Some specific problems appear when applying these memory configurations to multi-core electronic equipments. For the sake of clarity one will consider hereafter the dual-core case.

In a dual-core electronic equipment the two cores (processors or micro-controllers) cooperate to achieve the full equipment requirements. So, both cores have to be provided with softwares, which are initially stored somewhere in external ROM(s) in the electronic equipment, and that they must execute in some memory area while needing a RAM area (internal and/or external), at least for dynamic memory storage. Two classes of memory configuration are candidates to support such technical constrains.

In a first class a first core manages the storage of both softwares (for instance into a NAND flash memory) and provides the second core with the software it has to execute (for instance by copy from the NAND flash memory to a RAM) at each equipment boot. In this case each core must have its own RAM for data storage (or a more complex shared RAM to serve both cores), but the RAM memory for the second core has also to be designed (in storage capacity (or size) and performance) in order to allow the software execution from itself (because the second core can not execute it from elsewhere). Such a constraint implies that the first core must act as a "master" while the second core acts as a "slave", at least during each boot phase, which also impacts the security policies (when softwares have to be verified prior execution by a core). The drawback of this first class resides in the time required at each boot to transfer software into the second core's RAM, which might be not negligible (typically several seconds) and could penalize the overall equipment boot time.

In a second class each core has its own memory configuration (for instance a first core with a NOR flash memory and a PSRAM, and a second core with a NAND flash memory and a SDRAM). This second class allows to reuse existing and proven single-core configurations on each side (behaving as two independent systems), and avoids issues that could arise from a common memory configuration (for instance an increased boot time). But this second class has two main drawbacks : it implies higher cost and PCB area and each core has to be able to download its own software from an external source; having duplication of memories is more power consuming, which means that the power consumption cannot be optimised from an equipment wide perspective.

US 2003/0200448 A1 discloses a data authentication technique for a data access control function of an integrated system. The technique includes passing a data request from a functional master of the integrated system through the data access control function, and responsive to the data request, selectively authenticating requested data. The selective authentication, which can occur transparent to the functional master initiating the data request, includes employing integrity value generation on the requested data when originally stored and when retrieved, in combination with encryption and decryption thereof to ensure the authenticity of the requested data. As an enhancement, cascading integrity values may be employed to facilitate data authentication.

So, the object of this invention is to improve the situation.

To this end, according to the present invention, a multi-core device is provided as set forth in claim 1. The present invention also provides a method for multi-core processing of software in an electronic device as set forth in claim 8. Preferred embodiments of the present invention may be gathered from the dependent claims.

The multi-core device according to the invention may include additional characteristics considered separately or combined, and notably :
- another core may be associated with a secondary memory being part of the device memory means, arranged for durably storing the softwares to be executed by each of the cores and to transfer a durably stored software in order it could be stored into the corresponding primary memory;
   ➢ the secondary memory may be a flash memory of the ROM type, for instance;
   ➢ this other core may be associated with i) an external memory of the RAM type, being part of the device memory means, coupled to the secondary memory and capable of dynamically storing the software to be executed by the other associated core once it has been transferred from this secondary memory, and ii) a memory interface coupled to the external memory and arranged to allow the other core to execute the corresponding software stored into the external memory;
   ➢ in a variant the other core may comprise an internal memory of the RAM type, part of the device memory means, coupled to the secondary memory and capable of dynamically storing the software to be executed by the associated other core once it has been transferred from the secondary memory. In this case, the secondary memory is arranged to transfer a durably stored software in order it could be stored into the internal memory to be executed by the other core;
- each core may be associated with i) a primary memory of the RAM type, being part of the device memory means and arranged for durably storing, without power consumption, a software to be executed once it has been transferred and data associated with this software when it is executed, and ii) a memory interface coupled to the primary memory and arranged to allow this associated core to execute the software durably stored into the associated primary memory,
   ➢ it may further comprise an external memory connected to one of the cores and arranged for storing the code of the softwares before their transfer into the primary memories;
- each primary memory may be a Magnetic Random Access Memory (MRAM), for instance, or any other RAM type of memory with the following comparable (or equivalent) characteristics:
   a. at least the same data retention time without power supply (preferably infinite),
   b. at least the same maximum number of writing cycles (preferably unlimited),
   c. less or equal power consumption during read and write operations (preferably equivalent to a SDRAM or a PSRAM),
   d. at least same speed during these latter operations (read and write) (preferably comparable to a SDRAM),
   e. at least the same density (and preferably comparable to a SDRAM).

The multi-core device may be used in an electronic equipment such as a mobile telephone, a computer (possibly of the portable type), a game or audio or video player, a television, a set-top box or a personal digital assistant (PDA), for instance.

Other features and advantages of the invention will become apparent on examining the detailed specifications hereafter and the appended drawings, wherein:
Fig.1 schematically illustrates an example of electronic equipment comprising a first example of embodiment of a dual-core device according to the invention,
Fig.2 schematically illustrates an example of electronic equipment comprising a second example of embodiment of a dual-core device according to the invention,
Fig.3 schematically illustrates a comparative example of electronic equipment comprising a dual-core device not according to the invention.

The appended drawings may not only serve to complete the invention, but also to contribute to its definition, if need be.

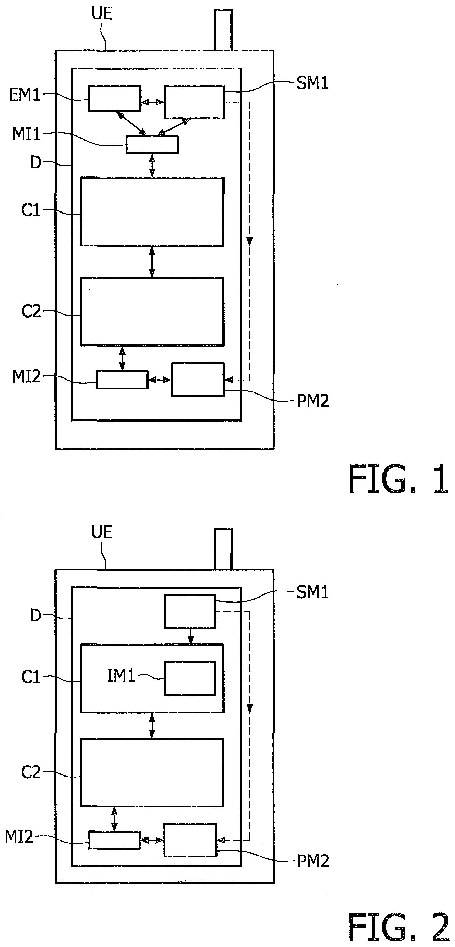

Reference is initially made to Fig.1 to describe a multi-core device D according to the invention.

In the following description it will be considered that the multi-core device D equips an electronic equipment UE, such as a mobile telephone. But, the invention is not limited to this type of electronic equipment. It applies to any type of electronic equipment, adapted or not to telecommunications, and needing at least two cores (i.e. processors or micro-controllers) cooperating to achieve chosen requirements. So, it may be also a personal digital assistant (PDA) or a computer, possibly of the portable type, or a (game or audio or video) player, or a television, or else a set-top box, for instance.

Moreover in the following description it will be considered that the multi-core device D comprises only two cores, in order to simplify the description of the invention. But, the invention is not limited to a dual-core device. Indeed, it applies to any device comprising two or more cores cooperating together.

As schematically illustrated in Fig.1 , a dual-core device D according to the invention comprises at least first C1 and second C2 cores arranged to execute different softwares that are stored into storing means of this device D.

In the following description it will be considered that the first core C1 is intended for executing a first software S1, while the second core C2 is intended for executing a second software S2 (different from the first one S1). But, each core Ci (here i = 1 or 2) may be intended for executing one or more softwares.

For instance, the first core C1 is a telecom processor while the second core C2 is an application processor.

According to the invention at least the second core C2 is associated with a primary memory PM2 and a memory interface MI2. One means here by "associated with" to be coupled to a primary memory PM2 through a memory interface MI2.

Moreover, one means here by "primary memory (PMi)" a memory of the RAM type, which is part of the memory means of the device D and is notably capable of storing data without consuming electrical power as long as it is not subject to a new data reading or writing cycle. In this invention, the primary memory PMi (associated with a core Ci) is intended for storing, on the one hand, the data defining a transferred (or downloaded) software Si (i.e. the code) which must be executed by this core Ci, and on the other hand, data which are associated with this software Si when it is executed by this core Ci.

For instance, a primary memory PMi is a Magnetic Random Access Memory (or MRAM). But, a primary memory PMi may be a memory having characteristics equivalent to or better than the ones of a MRAM, and more generally it may be any type of RAM offering the six following characteristics: i) compatibility with a memory interface Mli (in order to allow execution of a software Si it stores by the associated core Ci), ii) at least the same data retention time without power supply as a MRAM, and preferably an infinite data retention time, iii) at least the same maximum number of writing cycles as a MRAM, and preferably an unlimited number, iv) less or equal power consumption during read and write operations as a MRAM, and preferably equivalent to a SDRAM or a PSRAM, and v) at least same speed during the read and write operations, and preferably a speed comparable to a SDRAM, and vi) at least the same density as a MRAM, and preferably comparable to the one of a SDRAM.

The memory interface Mli is coupled to a primary memory PMi and allows a core Ci, to which it is connected to, to execute a software Si, which is durably stored into this primary memory PMi.

In the first example of embodiment illustrated in Fig.1 , the first core C1 is associated with an external secondary memory SM1, which is also part of the device memory means. This secondary memory SM1 is capable of storing in a durable manner the codes of the softwares Si (here S1 and S2), which must be executed by each core Ci. It may be also arranged to transfer a durably stored software Sj (here j = 2) into the corresponding primary memory PMj (j = 2). The transfer of the second software S2 into the primary memory PM2 is preferably carried out through the memory interface MI1, then the first core C1, then the second core C2 and finally the memory interface MI2. So in this case the secondary memory SM1 is also coupled to the memory interface MI1. But in a variant the coupling between the secondary memory SM1 and the primary memory PM2 could be direct.

Such a secondary memory SM1 may be a flash memory of the ROM type, for instance a NOR or NAND flash memory, or a hard-disk storage.

With such an arrangement, the second software S2 is transferred (or downloaded) from the secondary memory SM1 into the primary memory PM2 at the very first boot of the electronic equipment UE or each time the electronic equipment UE wants (or needs) to update it.

The secondary memory SM1 may be provided with a software Si or a new release of a software Si by a computer or a communication network to which its electronic equipment UE is connected to.

So, once the transfer of the second software S2 (i.e. the code) has been performed, the second core C2 becomes autonomous with regards to the first core C1. Therefore it can execute the second software S2 in an independent manner, and thus no time is lost for transferring the second software S2 at each electronic equipment boot.

In the first example of embodiment illustrated in Fig.1 , the first core C1 is also associated with an external memory EM1 of the RAM type, which is part of the memory means of the device D. This external memory EM1 is coupled to the secondary memory SM1 and is capable of dynamically storing the code of the first software S1 once this code has been transferred (or downloaded) from the secondary memory SM1.

For instance, if the secondary memory SM1 is a NOR flash memory, the external memory EM1 may be a PSRAM ("Pseudo-Static RAM"). In this example, the PSRAM EM1 can be used to only store temporary data, whereas the code can be directly executed from the NOR flash memory SM1. In a variant, if the secondary memory SM1 is a NAND flash memory, the external memory EM1 may be a SDRAM ("Synchronous Dynamic RAM"). In this variant the code can not be executed directly from the NAND flash memory SM1 and has to be loaded into the SDRAM EM1 prior to be executed; the same situation occurs when the external memory EM1 is a hard-disk storage.

In the first example of embodiment illustrated in Fig.1 , the first core C1 is also associated with a memory interface MI1. This memory interface MI1 is coupled to the external memory EM1 and allows the first core C1, to which it is connected to, to execute the first software S1 whose code is stored into this external memory EM1.

This first example of embodiment allows to reduce the cost of the device D and the area occupied by the device memory means in the printed circuit board (PCB). Indeed the second core C2 is now associated with a primary memory PM2 (for instance a MRAM) instead of being associated with a flash memory and an external RAM as it could be the case in a device of the prior art. This induces a decrease of the power consumption due to the use of only one chip (for the primary memory PM2), but also because this chip is a MRAM (or an equivalent), which does not need power to retain data (as it is the case of the flash memories) while being not limited in the number of data writing cycles. Moreover, this MRAM (or any equivalent) retaining its data, the boot phases (except the first one) take less time than in the case of a device of the prior art containing only an external RAM for the core C2.

Reference is now made to Fig.2 to describe a second example of embodiment of a multi-core device D according to the invention. This second example is a variant of the first example above described with reference to Fig.1 . In this second example the memory configuration of the second core C2 is identical to the one of the first example. So the second core memory configuration only comprises a primary memory PM2 (which is coupled to the second core C2 through a memory interface MI2).

In this second example the memory configuration of the first core C1 comprises an (external) secondary memory SM1 coupled to an internal memory IM1. More precisely, the first core C1 comprises an internal memory IM1 of the RAM type, which is part of the device memory means and is coupled to the secondary memory SM1 in which the code of the first software S1 (but also the code of the second software S2) is durably stored. This internal memory IM1 is intended for dynamically storing the code of the first software S1 which can be executed by the first core C1 once this code has been transferred (or downloaded) from the secondary memory SM1. The coupling between the secondary memory SM1 and the internal memory IM1 is usually carried out through the first core C1 (as illustrated). But in a variant it could be a direct coupling.

So, the secondary memory SM1 is arranged to transfer the durably stored first S1 and second S2 softwares respectively into the internal memory IM1 of the first core C1 and into the primary memory PM2 associated with the second core C2 in order they could be executed in an autonomous way by these first C1 and second C2 cores. As illustrated, the transfer of the second software S2 into the primary memory PM2 is preferably carried out through the first core C1, then the second core C2 and finally the memory interface MI2. But in a variant the coupling between the secondary memory SM1 and the primary memory PM2 could be direct.

Such a secondary memory SM1 may be a flash memory of the ROM type, for instance a NOR or NAND flash memory or a hard-disk storage.

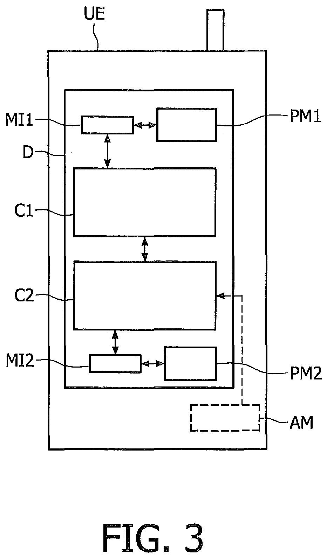

Reference is now made to Fig.3 to describe a comparative example of a multi-core device D not according to the invention. In this comparative example the memory configurations of the first C1 and second C2 cores are similar (but not necessarily identical). More precisely, the memory configuration of each core Ci is similar to the memory configuration of the second core C2 of the first example above described with reference to Fig.1 . So, the memory configuration of each core Ci comprises only a primary memory PMi (corresponding to the definition given above), coupled to the associated core Ci through a memory interface MIi.

The primary memory PM1 associated with the first core C1 may be identical to the primary memory PM2 associated with the second core C2. For instance, they are both of the MRAM type. But this is not mandatory and depends on the software Si they are respectively intended for durably storing.

As it is illustrated, before being transferred (or downloaded) into the primary memories PMi, the code of the softwares Si may be stored into an external auxiliary memory AM of the ROM type. Such an auxiliary memory AM may be either part of the device D, or part of the electronic equipment UE as illustrated in Fig.3 . It is important to notice that this external auxiliary memory AM is optional, because the primary memories PM1 and PM2 might also be populated in the factory, or maybe only primary memory PM1, which then takes the role of both the secondary memory SM1 and the external memory EM1 illustrated in Fig.1 .

However, this external auxiliary memory AM can be seen as a backup storage of the softwares S1 and S2 in case of a global failure of the system (corruption of the versions of the softwares S1 and S2 contained into the primary memories PM1 and PM2), in order to be able to get back to a well-known user equipment state (factory settings).

The external auxiliary memory AM must be connected to one of the cores Ci (for instance C2 as illustrated), which then becomes responsible for the user equipment boot phase and has to transfer (if necessary) the softwares S1 and/or S2 into the primary memory PM1 and/or the primary memory PM2.

This auxiliary memory AM is arranged to transfer (or download) the code of the softwares Si that it stores in order it could be stored into the corresponding primary memory PMi at the very first boot of the electronic equipment UE or each time the electronic equipment UE wants (or needs) to update at least one of them.

When this external auxiliary memory AM is present, it may be provided with a software Si or a new release of a software Si by a computer or a communication network to which its electronic equipment UE is connected to.

With such an arrangement, the softwares Si are transferred (or downloaded) from the auxiliary memory AM into the primary memories PM1 and PM2 at the very first boot of the electronic equipment UE or each time the electronic equipment UE wants (or needs) to update one of them.

So, once the transfer of the softwares S1 and S2 (i.e. the codes) have been performed, the first C1 and second C2 cores become autonomous. Therefore each core Ci can execute its software Si in an independent manner, and thus no time is lost for transferring the softwares Si at each boot.

This comparative example allows to still more reduce the cost of the device D and the area occupied by the device memory means in the printed circuit board (PCB). Indeed each core Ci is now associated with a primary memory PMi (for instance a MRAM) instead of being associated with a flash memory and an external RAM as it is the case in a device of the prior art. This induces an important decrease of the power consumption due to the use of only two chips (for the primary memories PM1 and PM2), but also because these chips are MRAMs (or equivalents) which do not need power to retain data (as it is the case of the flash memories) while being not limited in the number of data writing cycles.

The multi-core device D, according to the invention, may be an integrated circuit realized in CMOS technology or in any technology used in chip industry fabrication. It might also be composed of several integrated circuits (ICs), for example one integrated circuit (IC) for each core or memory, which can also be stacked in some packages or popped together, or also one integrated circuit (IC) for each (core and memory) subsystem (for example C2, MI2 and PM2 could be part of the same IC).

The invention is not limited to the embodiments of multi-core device described above, only as examples, but it encompasses all alternative embodiments which may be considered by one skilled in the art within the scope of the claims hereafter.

## Claims

1. A multi-core device (D) comprising:
at least two cores (C1, C2) each operable to execute instructions embodied as software stored on a persistent memory means (PM2, SM1, EM1), wherein at least one (C2) of said at least two cores (C1, C2) is associated with a primary memory (PM2) of said memory means (PM2, SM1, EM1), said primary memory (PM2) being random access memory, RAM,
a first software portion stored in said primary memory (PM2) to be executed by said at least one (C2) of said at least two cores (C1, C2) once said first software portion has been transferred from said primary memory (PM2) along with data associated with said first software portion, and
a first memory interface (MI2) interposed between and coupled to said primary memory (PM2) and to at least one (C2) of said at least two cores (C1, C2), for allowing said at least one (C2) of said at least two cores (C1, C2) to execute said first software portion stored in said primary memory (PM2) and to access the data associated with said first software portion,
wherein another one (C1) of said at least two cores (C1, C2) is associated with a secondary memory (SM1) that is a part of said memory means (PM2, SM1, EM) and is operable to persistently store software to be executed by said at least one (C2) of said at least two cores (C1, C2) and software to be executed by said another one (C1) of said at least two cores (C1, C2) and wherein said another one (C1) of said at least two cores (C1, C2) is operable to transfer, via a second memory interface (MI1), said first software portion stored in the secondary memory (SM1) to be stored in the primary memory (PM2),
wherein transferring said first software portion to the primary memory (PM2) is conducted through the second memory interface (MI1), said at least another one (C1) of said at least two cores (C1, C2), said at least one (C2) of said at least two cores (C1, C2) and the first memory interface (MI2), in turn.

2. The multi-core device according to claim 1, wherein said secondary memory (SM1) is a flash Read Only Memory, ROM.

3. The multi-core device according to claim 1, wherein said another one (C1) of said at least two cores (C1, C2) is associated with
an external RAM memory (EM1) which is part of said memory means (PM2, SM1, EM1), is coupled to said secondary memory (SM1) and is operable of dynamically storing a second software portion to be executed by said another one (C1) of said at least two cores (C1, C2) upon said second software portion being transferred from said secondary memory (SM1), and
wherein said second memory interface (MI1) is interposed between and coupled to said external RAM memory (EM1) and said another one (C1) of said at least two cores (C1, C2), said second memory interface (MI1) being operable to allow said another one (C1) of said at least two cores (C1, C2) to execute the second software portion stored in said external RAM memory (EM1).

4. The multi-core device according to one of claim 1 wherein said primary memory (PM2) is a Magnetic Random Access Memory.

5. The multi-core device according to claim 1 wherein said at least two cores (C1, C2) are utilized in a piece of electronic equipment (UE).

6. The multi-core device according to claim 5 wherein said piece of electronic equipment (UE) is selected from a group consisting of a mobile telephone, a computer, a portable computer, a game player, an audio player, a video player, a television, a set-top box and a personal digital assistant.

7. The multi-core device according to claim 5 wherein transfer of said first software portion from said secondary memory (SM1) to said primary memory (PM2) occurs during a first boot of said piece of electronic equipment (UE).

8. A method for multi-core processing of software in an electronic device (UE), the method comprising:
storing in a secondary memory (SM1) a plurality of instructions embodied as different software portions;
responsive to a first boot of said electronic device (UE), transferring a first software portion from said secondary memory (SM1) to a primary memory (PM2), wherein a second software portion is retained in said secondary memory (SMI);
accessing said first software portion by a first core (C2) and said second software portion by a second core (C1) from said primary memory (PM2) and said secondary memory (SM1), respectively and autonomously; and
executing at said first core (C2) and at said second core (C1) said first software portion and said second software portion, respectively and autonomously,
wherein transferring said first software portion from said secondary memory (SM1) to the primary memory (PM2) is conducted through a second memory interface (IM1), the second core (C1), the first core (C2) and a first memory interface (MI2), in turn.

9. The method of claim 8 wherein said primary memory (PM2) and said secondary memory (SM1) are operable for persistent storage.

10. The method of claim 9 wherein said primary memory (PM2) is Random Access Memory.

11. The method of claim 10 wherein said primary memory (PM2) is flash memory.

12. The method of claim 8 wherein said secondary memory (SM1) is Read Only Memory.

13. The method of claim 8 further comprising storing the second software portion in an external memory (EM1) coupled to said secondary memory (SM1).

14. The method of claim 8 further comprising storing the second software portion in an internal memory (IM1) associated with said second core (C1).

## Patentansprüche

1. Eine Mehrkern bzw. Multi-Core-Vorrichtung (D), aufweisend:
wenigstens zwei Kerne (C1, C2), die jeweils betrieben werden können für das Ausführen von Befehlen, die als eine auf einer persistenten Speichereinrichtung (PM2, SM1, EM1) gespeicherte Software verkörpert sind, wobei wenigstens einer (C2) der wenigstens zwei Kerne (C1, C2) mit einem primären Speicher (PM2) der Speichereinrichtung (PM2, SM1, EM1) assoziiert ist, wobei der primäre Speicher (PM2) ein Direktzugriffspeicher (Random Access Memory bzw. RAM) ist,
einen ersten Software-Teil, der in dem primären Speicher (PM2) gespeichert ist und durch den wenigstens einen (C2) der wenigstens zwei Kerne (C1, C2) auszuführen ist, sobald der erste Software-Teil von dem primären Speicher (PM2) zusammen mit Daten, die mit dem ersten Software-Teil assoziiert sind, übertragen wurde, und
eine erste Speicherschnittstelle (MI2), die zwischen dem primären Speicher (PM2) und wenigstens einem (C2) der wenigstens zwei Kerne (C1, C2) angeordnet und gekoppelt ist, um zu erlauben, dass wenigstens einer (C2) der wenigstens zwei Kerne (C1, C2) den in dem primären Speicher (PM2) gespeicherten ersten Software-Teil ausführt und auf die mit dem ersten Software-Teil assoziierten Daten zugreift,
wobei ein anderer (C1) der wenigstens zwei Kerne (C1, C2) mit einem sekundären Speicher (SM1) assoziiert ist, der ein Teil der Speichereinrichtung (PM2, SM1, EM) ist und betrieben werden kann für ein persistentes Speichern von Software, die durch wenigstens einen (C2) der wenigstens zwei Kerne (C1, C2) auszuführen ist, und von Software, die durch den anderen (C1) der wenigstens zwei Kerne (C1, C2) auszuführen ist, und wobei der andere (C1) der wenigstens zwei Kerne (C1, C2) betrieben werden kann für das Übertragen, über eine zweite Speicherschnittstelle (MI1), des ersten Software-Teils, der in dem sekundären Speicher (SM1) gespeichert ist und in dem primären Speicher (PM2) gespeichert werden soll,
wobei das Übertragen bzw. Transferieren des ersten Software-Teils zu dem primären Speicher (PM2) durch die zweite Speicherschnittstelle (MI1), den wenigstens einen anderen (C1) der wenigstens zwei Kerne (C1, C2), den wenigstens einen (C2) der wenigstens zwei Kerne (C1, C2) und die erste Speicherschnittstelle (MI2) hindurch in dieser Reihenfolge erfolgt.

2. Mehrkern-Vorrichtung nach Anspruch 1, wobei der sekundäre Speicher (SM1) ein Flash-Nur-Lese-Speicher (Flash Read Only Memory bzw. Flash-ROM) ist.

3. Mehrkern-Vorrichtung nach Anspruch 1, wobei der andere (C1) der wenigstens zwei Kerne (C1, C2) assoziiert ist mit:
einem externen RAM-Speicher (EM1), der Teil der Speichereinrichtung (PM2, SM1, EM1) ist, mit dem sekundären Speicher (SM1) gekoppelt ist und betrieben werden kann für das dynamische Speichern eines zweiten Software-Teils, der durch einen anderen (C1) der wenigstens zwei Kerne (C1, C2) auszuführen ist, nachdem der zweite Software-Teil von dem sekundären Speicher (SM1) übertragen wurde, und
wobei die zweite Speicherschnittstelle (MI1) zwischen dem externen RAM-Speicher (EM1) und dem anderen (C1) der wenigstens zwei Kerne (C1, C2) angeordnet und gekoppelt ist, wobei die zweite Speicherschnittstelle (MI1) betrieben werden kann, um zu erlauben, dass der andere (C1) der wenigstens zwei Kerne (C1, C2) den in dem externen RAM-Speicher (EM1) gespeicherten zweiten Software-Teil ausführt.

4. Mehrkern-Vorrichtung nach Anspruch 1, wobei der primäre Speicher (PM2) ein magnetischer RAM (Magnetic Random Access Memory) ist.

5. Mehrkern-Vorrichtung nach Anspruch 1, wobei die wenigstens zwei Kerne (C1, C2) in einem elektronischen Ausstattungsteil (User Equipment bzw. UE, d.h. Benutzergerät) verwendet werden.

6. Mehrkern-Vorrichtung nach Anspruch 5, wobei das elektronische Ausstattungsteil (UE) aus der Gruppe ausgewählt ist, die aus einem Mobiltelefon, einem Computer, einem tragbaren Computer, einem Spielgerät, einem Audiowiedergabegerät, einem Videowiedergabegerät, einem Fernsehgerät, einer Set-Top-Box und einem PDA (Personal Digital Assistant) besteht.

7. Mehrkern-Vorrichtung nach Anspruch 5, wobei das Übertragen des ersten Software-Teils von dem sekundären Speicher (SM1) zu dem primären Speicher (PM2) während eines ersten Bootens des elektronischen Ausstattungsteils (UE) erfolgt.

8. Ein Verfahren für eine Mehrkern-Verarbeitung von Software in einem elektronischen Gerät (User Equipment bzw. UE, d.h. Benutzergerät), wobei das Verfahren aufweist:
Speichern, in einem sekundären Speicher (SM1), einer Vielzahl von als verschiedene Software-Teile verkörperten Befehlen,
in Antwort auf ein erstes Booten des elektronischen Geräts (UE), Übertragen eines ersten Software-Teils von dem sekundären Speicher (SM1) zu einem primären Speicher (PM2), wobei ein zweiter Software-Teil in dem sekundären Speicher (SM1) behalten wird,
jeweils autonomes Zugreifen auf den ersten Software-Teil durch einen ersten Kern (C2) und auf den zweiten Software-Teil durch einen zweiten Kern (C1) von dem primären Speicher (PM2) und dem sekundären Speicher (SM1), und
jeweils autonomes Ausführen, an dem ersten Kern (C2) und dem zweiten Kern (C1), des ersten Software-Teils und des zweiten Software-Teils,
wobei das Übertragen des ersten Software-Teils von dem sekundären Speicher (SM1) zu dem primären Speicher (PM2) jeweils durch eine zweite Speicherschnittstelle (IM1), den zweiten Kern (C1), den ersten Kern (C2) und eine erste Speicherschnittstelle (MI2) hindurch in dieser Reihenfolge erfolgt.

9. Verfahren nach Anspruch 8, wobei der primäre Speicher (PM2) und der sekundäre Speicher (SM1) für ein persistentes Speichern betrieben werden können.

10. Verfahren nach Anspruch 9, wobei der primäre Speicher (PM2) ein Direktzugriffsspeicher (Random Access Memory bzw. RAM) ist.

11. Verfahren nach Anspruch 10, wobei der primäre Speicher (PM2) ein Flash-Speicher ist.

12. Verfahren nach Anspruch 8, wobei der sekundäre Speicher (SM1) ein Nur-Lese-Speicher (Read Only Memory bzw. ROM) ist.

13. Verfahren nach Anspruch 8, der weiterhin das Speichern des zweiten Software-Teils in einem externen Speicher (EM1), der mit dem sekundären Speicher (SM1) gekoppelt ist, aufweist.

14. Verfahren nach Anspruch 8, das weiterhin das Speichern des zweiten Software-Teils in einem internen Speicher (IM1), der mit dem zweiten Kern (C1) assoziiert ist, aufweist.

## Revendications

1. Dispositif multicœur (D) comprenant :
au moins deux cœurs (C1, C2), pouvant chacun exécuter des instructions incorporées sous forme de logiciel stocké sur des moyens de mémoire persistante (PM2, SM1, EM1), dans lequel au moins l'un (C2) desdits au moins deux cœurs (C1, C2) est associé à une mémoire primaire (PM2) desdits moyens de mémoire (PM2, SM1, EM1), ladite mémoire primaire (PM2) étant une mémoire vive, RAM,
une première partie de logiciel stockée dans ladite mémoire primaire (PM2) devant être exécutée par ledit au moins un (C2) desdits au moins deux cœurs (C1, C2) une fois que ladite première partie de logiciel a été transférée depuis ladite mémoire primaire (PM2) avec les données associées à ladite première partie de logiciel, et
une première interface mémoire (MI2) interposée entre et reliée à ladite mémoire primaire (PM2) et à au moins un (C2) desdits au moins deux cœurs (C1, C2), pour permettre audit au moins un (C2) desdits au moins deux cœurs (C1, C2) d'exécuter ladite première partie de logiciel stockée dans ladite mémoire primaire (PM2) et d'accéder aux données associées à ladite première partie de logiciel,
dans lequel un autre (C1) desdits au moins deux cœurs (C1, C2) est associé à une mémoire secondaire (SM1) qui fait partie desdits moyens de mémoire (PM2, SM1, EM1) et est utilisable pour stocker de façon persistante un logiciel à exécuter par ledit au moins un (C2) desdits au moins deux cœurs (C1, C2) et un logiciel à exécuter par ledit autre (C1) desdits au moins deux cœurs (C1, C2) et dans lequel ledit autre (C1) desdits au moins deux cœurs (C1, C2) est utilisable pour transférer, par l'intermédiaire d'une deuxième interface mémoire (MI1), ladite première partie de logiciel stockée dans la mémoire secondaire (SM1) à stocker dans la mémoire primaire (PM2),
dans lequel le transfert de ladite première partie de logiciel à la mémoire primaire (PM2) est effectué au moyen de la deuxième interface mémoire (MI1), dudit au moins un autre (C1) desdits au moins deux cœurs (C1, C2), dudit au moins un (C2) desdits au moins deux cœurs (C1, C2) et de la première interface mémoire (MI2), l'un après l'autre.

2. Dispositif multicœur selon la revendication 1, dans lequel ladite mémoire secondaire (SM1) est une mémoire morte, ROM, flash.

3. Dispositif multicœur selon la revendication 1, dans lequel ledit autre (C1) desdits au moins deux cœurs (C1, C2) est associé à
une mémoire RAM externe (EM1) qui fait partie desdits moyens de mémoire (PM2, SM1, EM1), est reliée à ladite mémoire secondaire (SM1) et est capable de stocker dynamiquement une deuxième partie de logiciel à exécuter par ledit autre (C1) desdits au moins deux cœurs (C1, C2) au moment du transfert de ladite deuxième partie de logiciel depuis ladite mémoire secondaire (SM1), et
dans lequel ladite deuxième interface mémoire (MI1) est interposée entre et reliée à ladite mémoire RAM externe (EM1) et ledit autre (C1) desdits au moins deux cœurs (C1, C2), ladite deuxième interface mémoire (MI1) pouvant être utiliséee pour permettre audit (C1) desdits au moins deux cœurs (C1, C2) d'exécuter la deuxième partie de logiciel stockée dans ladite mémoire externe RAM (EM1).

4. Dispositif multicœur selon la revendication 1, dans lequel ladite mémoire primaire (PM2) est une mémoire vive magnétique.

5. Dispositif multicœur selon la revendication 1, dans lequel lesdits au moins deux cœurs (C1, C2) sont utilisés dans une partie d'un équipement électronique (UE).

6. Dispositif multicœur selon la revendication 5, dans lequel ladite partie d'équipement électronique (UE) est sélectionnée dans un groupe constitué d'un téléphone mobile, d'un ordinateur, d'un ordinateur portable, d'un lecteur de jeu, d'un lecteur audio, d'un lecteur vidéo, d'un téléviseur, d'un décodeur et d'un assistant numérique personnel.

7. Dispositif multicœur selon la revendication 5, dans lequel le transfert de ladite première partie de logiciel de ladite mémoire secondaire (SM1) à ladite mémoire primaire (PM2) se produit pendant un premier démarrage dudit équipement électronique (UE).

8. Procédé de traitement multicœur de logiciel dans un dispositif électronique (UE), le procédé comprenant :
le stockage dans une mémoire secondaire (SM1) d'une pluralité d'instructions incorporées sous forme de différentes parties de logiciel ;
en réponse à un premier démarrage dudit dispositif électronique (UE), le transfert d'une première partie de logiciel de ladite mémoire secondaire (SM1) à une mémoire primaire (PM2), dans lequel une deuxième partie de logiciel est conservée dans ladite mémoire secondaire (SM1) ;
l'accès à ladite première partie de logiciel par un premier cœur (C2) et à ladite deuxième partie de logiciel par un deuxième cœur (C1) à partir de ladite mémoire primaire (PM2) et de ladite mémoire secondaire (SM1), respectivement et de façon autonome ; et
l'exécution sur ledit premier cœur (C2) et sur ledit deuxième cœur (C1) de ladite première partie de logiciel et de ladite deuxième partie de logiciel respectivement et de façon autonome,
dans lequel le transfert de ladite première partie de logiciel à la mémoire primaire (PM2) est effectué au moyen d'une deuxième interface mémoire (MI1), dudit deuxième cœur (C1), dudit premier cœur (C2) et d'une première interface mémoire (MI2), l'un après l'autre.

9. Procédé selon la revendication 8, dans lequel ladite mémoire primaire (PM2) et ladite mémoire secondaire (SM1) peuvent être utilisées pour un stockage persistant.

10. Procédé selon la revendication ladite mémoire 9, dans lequel ladite mémoire primaire (PM2) est une mémoire vive.

11. Procédé selon la revendication 10, dans lequel ladite mémoire primaire (PM2) est une mémoire flash.

12. Procédé selon la revendication 8, dans lequel ladite mémoire secondaire (SM1) est une mémoire morte.

13. Procédé selon la revendication 8, comprenant en outre le stockage de la deuxième partie de logiciel dans une mémoire externe (EM1) reliée à ladite mémoire secondaire (SM1).

14. Procédé selon la revendication 8, comprenant en outre le stockage de la deuxième partie de logiciel dans une mémoire interne (IM1) associée audit deuxième cœur (C1).
